# EUROPÄISCHE PATENTSCHRIFT

(11) **EP 1 832 765 B1**
(45) Veröffentlichungstag und Bekanntmachung des Hinweises auf die Patenterteilung: **21.05.2008**
(21) Anmeldenummer: 07004594.3
(22) Anmeldetag: 06.03.2007
(51) Int. Cl.: F16C 33/42, F16C 33/44

(54) **Verfahren zur Herstellung eines Wälzlagerkäfigs**
Method for manufacturing a roller bearing cage
Procédé de fabrication d'une cage de roulement

(30) Priorität: 06.03.2006 DE 102006010171
(43) Veröffentlichungstag der Anmeldung: 12.09.2007
(73) Patentinhaber: Gebrüder Reinfurt GmbH & Co. KG, 97074 Würzburg (DE)
(72) Erfinder: Wiedmann, Ferdinand, 97282 Retzstadt (DE); Niedermeier, Herbert, Dipl.-Ing., 97490 Poppenhausen (DE)
(74) Vertreter: Müller-Boré & Partner Patentanwälte

(56) Entgegenhaltungen:
- EP-A- 1 262 674
- EP-A1- 0 861 991
- EP-A1- 0 896 164
- EP-A2- 0 794 345
- DE-A1- 10 110 915
- JP-A- 2003 239 994
- US-A- 5 630 668

## Beschreibung

Die vorliegende Erfindung betrifft ein Verfahren zur Herstellung eines Wälzlagerkäfigs, der zum Führen bzw. Lagern von Wälzkörpern in einem Wälzlager geeignet ist, sowie die Verwendung des derart erhaltenen Wälzlagerkäfigs.

Wälzlager werden in der Technik verbreitet verwendet, um Rotationsbewegungen zwischen relativ zueinander bewegten Maschinenteilen zu übertragen. Bei Wälzlagern rollen kugel- oder rollenförmige Wälzkörper auf Laufbahnen mit hoher Festigkeit, Oberflächengüte und Formtreue, die in den Innen- bzw. Außenring des Wälzlagers eingearbeitet sind. Zur Gruppe der Wälzlager gehören z.B. Kugel-, Nadel-, Kegelrollen-, Pendelrollen- und Zylinderrollenlager. Die Wälzkörper werden meist in einem Wälzlagerkäfig (im Folgenden auch einfach als Käfig bezeichnet) geführt bzw. gelagert.

Im Stand der Technik sind als geeignete Materialien für Wälzlagerkäfige insbesondere metallische Werkstoffe, wie Hartmessing, Bronze, Aluminium, Stahl oder Edelstahl, und Kunststoff- bzw. Verbundwerkstoffe, wie gewebeverstärktes Phenolharz, Hostaform (POM) oder glasfaserverstärktes Polyamid, beschrieben. Beispielsweise wird in DE 80 29 266 U1 ein Käfig aus Stahl beschrieben, der mit einem Kunststoff, vorzugsweise Nylon, beschichtet ist. Weiter ist aus DE 296 02 481 U1 ein Kunststoffkammkäfig für Kugellager bekannt, wobei ein Kunststoff durch Glasfaser oder Kohlefasern verstärkt ist. DE 203 06 436 U1 beschreibt Käfige aus einem mit PTFE gefülltem Polyaryletherketon. Eines der wesentlichen Probleme bei Käfigen aus Kunststoffwerkstoffen bzw. Verbundwerkstoffen, beispielsweise einem gewebeverstärkten Phenolharz mit einem Baumwollfeinstgewebe, besteht darin, dass diese Materialien meist nur bis zu etwa 120°C thermisch stabil sind und daher eine Dampfdrucksterilisation bei 136°C nicht möglich ist. Insbesondere für Anwendungen im medizinischen Bereich stellt dies aber ein großes Problem dar.

Eine weitere Problematik bei der Verwendung von Wälzlagern besteht in der Forderung nach schmiermittelarmen bzw. schmiermittelfreien Wälzlagern. So sind gerade in Anwendungen der Medizintechnik und der Lebensmittelindustrie Lagerungen erwünscht, bei denen kein Schmiermittel oder nur ein Trockenschmiermittel vorhanden ist.

Um der Forderung nach einer schmiermittelarmen bzw. schmiermittelfreien Lagerung zu genügen, wurde unter anderem vorgeschlagen, die Laufbahnen des Innen- bzw. Außenrings des Wälzlagers oder die Wälzkörper mit einer den Reibwert verringernden Beschichtung zu beschichten. Dabei wurden unter anderem Molybdändisulfid, Gold, Silber, Titannitrid und Titancyanid als Beschichtungen verwendet.

In diesem Zusammenhang wurde ebenfalls vorgeschlagen, einen Wälzlagerkäfig auf Kunststoffbasis zu verwenden, in dem ein Material mit selbstschmierenden Eigenschaften eingebettet ist. Dabei wird zunächst der Wälzlagerkäfig bereitgestellt und anschließend die Beschichtung durch Aufsprühen oder Eintauchen des Wälzlagerkäfigs in eine Beschichtungslösung oder -dispersion aufgebracht. Dieses nachträgliche Aufbringen der Beschichtung auf den Wälzlagerkäfig ist allerdings sehr unwirtschaftlich und führt zu Beschichtungen mit einer nicht konstanten Schichtdicke. Ferner ist die Haftung der erhaltenen Beschichtung im allgemeinen nicht zufriedenstellend.

Weiterhin ist es bekannt, vgl. DE-A-10110915, die den nächstkommenden Stand der Technik bildet, einen Wälzlagerkäfig ausgehend von einem Bandmaterial auf Metallbasis mit ebener unterer und ebener oberer Fläche zu festigen, der eine Beschichtung zur Verringerung des Reibwerts mit midestens einem Fluorpolymer und einer Haftvermittlerschicht (aus Kunststoff) umfaßt.

Der vorliegenden Erfindung liegt daher die Aufgabe zugrunde, ein geeignetes Verfahren zur Herstellung eines Wälzlagerkäfigs bereitzustellen, welches einfach und wirtschaftlich ist und dabei Wälzlagerkäfige liefert, die einer Sterilisationsbehandlung unterzogen werden können, ohne die Festigkeit des Wälzlagerkäfigs signifikant zu verschlechtern, und die darüber hinaus eine verbesserte Lebensdauer und eine Eignung zur Verwendung in hochtourigen Wälzlagern aufweisen.

Diese Aufgabe wird durch die in den Ansprüchen gekennzeichneten Ausführungsformen gelöst.

Insbesondere wird ein Verfahren zum Herstellen eines Wälzlagerkäfigs bereitgestellt, umfassend
- das Bereitstellen eines Bandmaterials auf Metallbasis mit einer unteren Fläche und einer oberen Fläche,
- das Bereitstellen einer Folienbahn auf Basis eines Beschichtungsmaterials zur Verringerung des Reibwerts und einer Folienbahn eines Haftvermittlermaterials, indem Haftvermittlermaterial und Beschichtungsmaterial jeweils zu einem Halbzeug gesintert und anschließend in einer Drehmaschine jeweils derart weiterverarbeitet werden, dass, während das Halbzeug in Rotation versetzt wird, im Einstechverfahren mittels Schälmesser jeweils eine entsprechende Folienbahn erzeugt wird,
- das Verbinden von dem Bandmaterial auf Metallbasis, der Folienbahn auf Basis des Beschichtungsmaterials zur Verringerung des Reibwerts und der Folienbahn des Haftvermittlermaterials in einer Doppelbandpresse bei einer Temperatur in dem Bereich von 300 bis 330°C und unter einem Druck von 2 bis 20 N/mm², so dass mindestens auf der oberen Fläche des Bandmaterials eine Zwischenschicht des Haftvermittlermaterials und darauf die Beschichtung zur Verringerung des Reibwerts angeordnet werden, wodurch ein entsprechendes Metallkunststoffhybridband gebildet wird,
wobei die Beschichtung zur Verringerung des Reibwerts mindestens ein Fluorpolymer umfasst und die Gesamtdicke von Zwischenschicht des Haftvermittlermaterials und Beschichtung zur Verringerung des Reibwerts im Bereich von 10 bis 100 µm liegt, und
- das Verarbeiten des Metallkunststoffhybridbands in die Form eines Wälzlagerkäfigs, wobei die mindestens eine Oberflächenseite des Wälzlagerkäfigs, welche die Beschichtung aufweist, derart angeordnet ist, dass sie den zu führenden bzw. zu lagernden Wälzkörpern zugewandt ist.

Der erfindungsgemäß erhaltene Wälzlagerkäfig ist für alle herkömmlichen Wälzlager geeignet, bei denen ein Wälzlagerkäfig zum Führen bzw. Lagern der Wälzkörper eingesetzt werden kann. Vorzugsweise ist der erfindungsgemäß erhaltene Wälzlagerkäfig für Kugel-, Nadel-, Kegelrollen-, Pendelrollen- oder Zylinderrollenlager bestimmt, und besonders bevorzugt für Kugellager mit Kugeln als Wälzkörper.

Der Wälzlagerkäfig wird erfindungsgemäß aus einem zunächst erzeugten einteiligen bzw. einstückigen Metallkunststoffhybridband gefertigt, welches ein Bandmaterial auf Metallbasis mit einer unteren Fläche und einer oberen Fläche und einer mindestens auf der oberen Fläche des Bandmaterials aufgebrachten Beschichtung zur Verringerung des Reibwerts umfasst, wobei eine Folie eines Haftvermittlers zwischengelegt wird. Das Metallkunststoffhybridband hat üblicherweise eine Breite von 1 bis 800 mm und eine Dicke von 0,05 bis 3 mm und kann anschließend in die Form eines Wälzlagerkäfigs verarbeitet werden.

Das Bandmaterial auf Metallbasis kann jedes für die Verwendung in Wälzlagerkäfigen geeignetes Metall bzw. jede für die Verwendung in Wälzlagerkäfigen geeignete Metalllegierung sein. Vorzugsweise ist das Bandmaterial ein Stahl gemäß DIN 10088-3 (195-8). Spezielle Stähle gemäß DIN 10088-3 (195-8), die im Rahmen der vorliegenden Erfindung verwendet werden können, sind Stähle mit den Werkstoffnummern 1.4310 (DIN-Kurzname: X 10 CrNi 188), 1.4016 (X 6 Cr 17), 1.4319 (X 3 CrNiN 178), 1.4567 (X 3 CrNiCu 189), 1.4305 (X 12 CrNiS 189), 1.4301 (X 5 CrNi 189), 1.4401 (X 5 CrNiMo 17 122), 1.4571 (X 6 CrNiMoTi 17 122), 1.4404 (X 2 CrNiMo 17 132), 1.4429 (X 2 CrNiMoN 17 133), 1.4435 (X 2 CrNiMo 18 142), 1.4539 (X 1 NiCrMoCu 25 20 5), 1.4547 (X 1 CrNiMoCu 20187), 1.4563 (X 1 NiCrMoCuN 31 27 4), 1.4591 (X 1 CrNiMoCuN 33 32 1), 1.4652, 1.4362 (X 2 CrNiN 23 4), 1.4460 (X 3 CrNiMoN 27 5 2), 1.4462 (X 2 CrNiMoN 22 5 3), 1.4410 (X 2 CrNiMo 25 7 4), 1.4501 (X 2 CrNiMoCuWN 25 74), 2.4616 (EL NiMo 29), 2.4612 (EL NiMo 15 Cr 15 Ti), 2.4602 (NiCr 21 Mo 14 W), 2.4819 (NiMo 16 Cr 15 W), 2.4856 (NiCr 22 Mo 9 Nb), 2.4668 (NiCr 19 NbMo), 2.4857 (NiCr 21 Mo), 1.4847 (X 8 CrNiAlTi 2020), 1.4944/1.3980 (X 4 NiCrTi 26 15), 1.4534 (X 3 CrNiMoA1 13 8 2), 1.4542, 1.4568, 1.4545 oder 1.4108 (X 30 CrMoN151) gemäß DIN 10088-3 (195-8). Besonders bevorzugt sind Stähle mit den Werkstoffnummern 1.4301, 1.4310 und 1.4016 gemäß DIN 10088-3 (195-8).

Üblicherweise wird die Beschichtung zur Verringerung des Reibwerts zusammen mit der Zwischenschicht des Haftvermittlers nur auf die obere Fläche des Bandmaterials aufgebracht. Die Beschichtung kann jedoch unter Umständen auch auf die obere und die untere Fläche des Bandmaterials aufgebracht werden. Die aufgebrachte Beschichtung zur Verringerung des Reibwerts umfasst mindestens ein Fluorpolymer. Ein für die Beschichtung zur Verringerung des Reibwerts geeignetes Fluorpolymer ist vorzugsweise ein perfluoriertes Polymer. Im Rahmen der vorliegenden Erfindung ist Polytetrafluorethylen (PTFE) besonders bevorzugt, vorzugsweise ein solches mit einem Molekulargewicht von 500.000 bis 10.000.000 g/mol. Copolymere von Polytetrafluorethylen mit anderen geeigneten fluorhaltigen oder geeigneten nichtfluorhaltigen Monomeren, die eine den Reibwert verringernde Wirkung aufweisen, können ebenfalls verwendet werden.

Vorzugsweise kann die Beschichtung zur Verringerung des Reibwerts weiter 1 bis 20 Gew.-% eines Füllstoffs, bezogen auf das Gesamtgewicht der Beschichtung, umfassen. Bevorzugter umfasst die Beschichtung zur Verringerung des Reibwerts 2 bis 10 Gew.-% des Füllstoffs, noch bevorzugter 4 bis 6 Gew.-%, bezogen auf das Gesamtgewicht der Beschichtung. Als Füllstoff können alle dafür geeigneten Materialien verwendet werden. Vorzugsweise ist der Füllstoff Polyphenylensulfon (PPSO₂).

Die Gesamtdicke von Zwischenschicht des Haftvermittlermaterials und Beschichtung zur Verringerung des Reibwerts liegt im Bereich von 10 bis 100 µm, vorzugsweise im Bereich von 20 bis 80 µm, und noch bevorzugter im Bereich von 40 bis 60 µm.

Die Beschichtung wird mindestens auf die obere Fläche des Bandmaterials aufgebracht, damit diese in dem erfindungsgemäß erhaltenen Wälzlagerkäfig den zu führenden bzw. zu lagernden Wälzkörpern zugewandt ist, d.h. auf der den Wälzkörpern zugewandten Innenseite des Wälzlagerkäfigs aufgebracht ist. Dadurch wird erreicht, dass durch die Beschichtung der Reibwert für die Wälzkörper in dem Wälzlager verringert wird.

Ferner wird zwischen dem Bandmaterial und der Beschichtung zur Verringerung des Reibwerts eine Zwischenschicht als Haftvermittler angeordnet. Durch das Aufbringen dieser zusätzlichen Zwischenschicht wird die Haftung zwischen der Beschichtung und dem Bandmaterial weiter verbessert. Als Zwischenschicht können alle geeigneten haftvermitteinden Materialien verwendet werden. Vorzugsweise ist die Zwischenschicht eine Schicht auf Basis von Tetrafluorethylen-Perfluoralkylvinylether-Copolymeren (PFA).

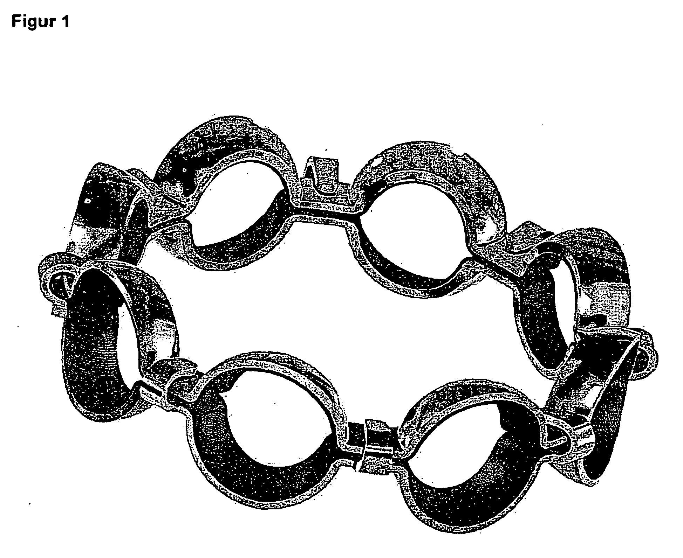

Ein Beispiel für einen gemäß der vorliegenden Erfindung erhaltenen Kugellagerkäfig ist in Figur 1 gezeigt.

Figur 1 zeigt einen erfindungsgemäß gefertigten Kugellagerkäfig für Rillenkugellager, der aus einem Metallkunststoffhybridband gefertigt worden ist, wobei die Beschichtung des Metallbands im Wesentlichen Polytetrafluorethylen umfasst.

Im Rahmen der vorliegenden Erfindung wird sowohl der Haftvermittler als auch die Beschichtung in Form einer Folie auf das Bandmaterial aufgebracht. Vor der Folienherstellung werden die entsprechenden Compounds für Haftvermittler und Beschichtung zu einem Halbzeug gesintert. Die Weiterverarbeitung der jeweiligen Halbzeuge erfolgt in einer Drehmaschine, d.h. während das Halbzeug in Rotation versetzt wird, erzeugt üblicherweise ein spezielles Schälmesser im Einstechverfahren einen Endlosspan, der schließlich auf einem Spulenkörper aufgewickelt wird. Vorzugsweise machen das Haftvermittlermaterial 30-50%, mehr bevorzugt etwa 40%, und das Beschichtungsmaterial zur Verringerung des Reibwerts 50-70%, mehr bevorzugt etwa 60%, der Gesamtdicke aus.

In einer Doppelbandpresse werden dann üblicherweise über drei Spulenkörper das zu beschichtende Metallband, der Haftvermittler und die Beschichtung zugeführt. Es ist auch möglich, vorab die beiden Folien für Haftvermittler und Beschichtung zu einer Hybridfolie zu verarbeiten, wodurch beim Beschichten in der Doppelbandpresse eine Folienbahn eingespart werden kann.

Das Metallband kann vor dem Beschichten mindestens auf der oberen Fläche definiert aufgerauht werden. Dies kann durch Anschleifen, Bürsten oder Strahlen erfolgen. Die Mittenrauhwerte Ra, die durch die Nachbearbeitung entstehen, liegen üblicherweise bei 0,5 bis 1 µm. Anstatt der mechanischen Bearbeitung ist auch eine Oberflächenaktivierung über ein Ätzverfahren erreichbar. Üblicherweise erfolgt in einer nachgeschalteten Waschanlage, die mit wässsrig-alkalischen Reinigern betrieben werden kann, die Entfettung des Metallbandes. Das Waschbad ist mit und ohne Ultraschallunterstützung ausführbar. Die Temperatur im Waschbad liegt üblicherweise in dem Bereich von 50 bis 90°C, vorzugsweise in dem Bereich von 60 bis 70°C. Alternativ kann das Entfetten des Metallbandes auch in einer Lösemittel-Waschanlage durchgeführt werden.

Im Einlauf der Doppelbandpresse werden Metallband, Haftvermittler und Beschichtung über diverse Umlenkrollen übereinander in Position gebracht und anschließend über Druck und Temperatur miteinander verbunden. Die Prozeßtemperatur liegt in dem Bereich von 300 bis 330°C, vorzugsweise in dem Bereich von 310 bis 325°C. In dem angegebenen Temperaturbereich schmilzt der Haftvermittler und verbindet die Beschichtung mit dem Substrat. Eine sehr gute Haftung wird mit einem Prozeßdruck von 2 bis 20 N/mm², vorzugsweise von 5 bis 10 N/mm² erreicht. Die Durchlaufgeschwindigkeiten in der Presse variieren sehr stark, da sich die Aufheizraten für den entsprechenden Banddickenbereich deutlich unterscheiden. Das so erhaltene Metallkunststoffhybridband wird schließlich auf einen Spulenkörper gewickelt und für die Käfigfertigung bereitgestellt.

Nach dem Aufbringen der Beschichtung wird das Metallkunststoffhybridband in die Form eines Wälzlagerkäfigs verarbeitet, wobei die mindestens eine Oberflächenseite des Wälzlagerkäfigs, welche die Beschichtung aufweist, derart angeordnet wird, dass sie in einem Wälzlager den zu führenden bzw. zu lagernden Wälzkörpern zugewandt ist.

Das Verarbeiten des Metallkunststofhybridbands in die Form eines Wälzlagerkäfigs kann durch alle geeigneten, im Stand der Technik bekannten Verfahren erfolgen. Vorzugsweise wird das Metallkunststoffhybridband durch Schneiden und Prägen in die Form eines Wälzlagerkäfigs bearbeitet. Dieses Verfahren hat den vorteilhaften Effekt, daß die Beschichtung beim Prägen über die beim Schneiden erzeugte Schnittkante des Käfigs fließt und damit eine Materialtrennung zum Gegenlaufpartner (Innen- oder Außenringschulter) gewährleistet. Die Folge davon ist eine Reduzierung der dynamischen Laufreibung im Kugellager.

Die durch das erfindungsgemäße Verfahren erhaltenen Wälzlagerkäfige weisen den Vorteil auf, dass die den Reibwert verringernde Beschichtung eine konstante Schichtdicke sowie eine sehr gute Haftung aufweist. Dies wirkt sich insbesondere im Kontaktbereich des Wälzkörpers mit dem Wälzlagerkäfig vorteilhaft aus. Weiter ist das Aufbringen der Beschichtung vor dem Verarbeiten des Metallbands in die Form eines Wälzlagerkäfigs wirtschaftlich wesentlich günstiger als herkömmliche Verfahren, bei denen bereits gefertigte Wälzlagerkäfige nachträglich beschichtet werden. Derartig aufgebrachte Beschichtungen weisen außerdem eine nicht konstante Schichtdicke sowie eine geringere Haftintensität im Vergleich zu den erfindungsgemäßen Beschichtungen von Wälzlagerkäfigen auf.

Versuche mit erfindungsgemäßen Lappen- oder Nietkäfigen auf Metallbasis für Rillenkugellager haben ergeben, dass die Notlaufeigenschaft dieser Kugellager unter Mangelschmierung dem herkömmlichen Kugellager mit einem unbeschichteten Stahlblechkäfig um ein Vielfaches überlegen ist. Weiter wurde festgestellt, dass die Reibung in solchen, mit Mangelschmierung behafteten Kugellagern bei den erfindungsgemäß erhaltenen Käfigen extrem niedrig ist. Auch das Verschleißverhalten in der Mangelschmierungssituation ist bei den erfindungsgemäß erhaltenen Käfigen äußerst günstig. Kugellager, die mit den erfindungsgemäß erhaltenen Käfigen ausgerüstet sind, laufen wesentlich länger als Kugellager, die mit herkömmlichen Lappenkäfigen ausgerüstet sind.

Wälzlager, die mit dem erfindungsgemäß erhaltenen Wälzlagerkäfig ausgestattet sind, weisen dementsprechend besonders günstige Eigenschaften unter Mangelschmierung auf. Außerdem ist das erfindungsgemäße Herstellungsverfahren relativ einfach und läßt sich mit geringem Aufwand in die Praxis umsetzen.

Schließlich betrifft die vorliegende Erfindung die Verwendung des erfindungsgemäß erhaltenen Wälzlagerkäfigs in einem hochtourigen Kugellager mit einem Drehzahlkennwert n × dm > 1.000.000 mm/min, insbesondere für industrielle Spindellageranwendungen und im medizinischen Bereich, insbesondere in der Dentaltechnik.

## Patentansprüche

1. Verfahren zum Herstellen eines Wälzlagerkäfigs, umfassend die Schritte:
- das Bereitstellen eines Bandmaterials auf Metallbasis mit einer unteren Fläche und einer oberen Fläche,
- das Bereitstellen einer Folienbahn auf Basis eines Beschichtungsmaterials zur Verringerung des Reibwerts und einer Folienbahn eines Haftvermittlermaterials, indem Haftvermittlermaterial und Beschichtungsmaterial jeweils zu einem Halbzeug gesintert und anschließend in einer Drehmaschine jeweils derart weiterverarbeitet werden, dass, während das Halbzeug in Rotation versetzt wird, im Einstechverfahren mittels Schälmesser jeweils eine entsprechende Folienbahn erzeugt wird,
- das Verbinden von dem Bandmaterial auf Metallbasis, der Folienbahn auf Basis des Beschichtungsmaterials zur Verringerung des Reibwerts und der Folienbahn des Haftvermittlermaterials in einer Doppelbandpresse bei einer Temperatur in dem Bereich von 300 bis 330°C und unter einem Druck von 2 bis 20 N/mm², so dass mindestens auf der oberen Fläche des Bandmaterials eine Zwischenschicht des Haftvermittlermaterials und darauf die Beschichtung zur Verringerung des Reibwerts angeordnet werden, wodurch ein entsprechendes Metallkunststoffhybridband gebildet wird,
wobei die Beschichtung zur Verringerung des Reibwerts mindestens ein Fluorpolymer umfasst und die Gesamtdicke von Zwischenschicht des Haftvermittlermaterials und Beschichtung zur Verringerung des Reibwerts im Bereich von 10 bis 100 µm liegt, und
- das Verarbeiten des Metallkunststoffhybridbands in die Form eines Wälzlagerkäfigs, wobei die mindestens eine Oberflächenseite des Wälzlagerkäfigs, welche die Beschichtung aufweist, derart angeordnet ist, dass sie den zu führenden bzw. zu lagernden Wälzkörpern zugewandt ist.

2. Verfahren nach Anspruch 1, wobei das Bandmaterial auf Metallbasis ein Stahl ist, welcher DIN 10088-3 (195-8) entspricht.

3. Verfahren nach Anspruch 2, wobei der Stahl ein Stahl mit der Werkstoffnummer 1.4301, 1.4310 oder 1.4016 gemäß DIN 10088-3 (195-8) ist.

4. Verfahren nach einem der Ansprüche 1 bis 3, wobei die Gesamtdicke von Zwischenschicht des Haftvermittlermaterials und Beschichtung zur Verringerung des Reibwerts im Bereich von zwischen 40 bis 60 µm liegt.

5. Verfahren nach einem der Ansprüche 1 bis 4, wobei das Fluorpolymer Polytetrafluorethylen ist.

6. Verfahren nach einem der Ansprüche 1 bis 5, wobei die Beschichtung zur Verringerung des Reibwerts weiter 1 bis 20 Gew.-% eines Füllstoffs, bezogen auf das Gesamtgewicht der Beschichtung, umfasst.

7. Verfahren nach Anspruch 6, wobei die Beschichtung 4 bis 6 Gew.-% des Füllstoffs, bezogen auf das Gesamtgewicht der Beschichtung, umfasst.

8. Verfahren nach Anspruch 6 oder 7, wobei der Füllstoff Polyphenylensulfon (PPSO₂) ist.

9. Verfahren nach einem der Ansprüche 1 bis 8, wobei die Zwischenschicht eine Schicht auf Basis von Tetrafluorethylen-Perfluoralkylvinylether-Copolymeren (PFA) ist.

10. Verfahren nach einem der Ansprüche 1 bis 9, worin vor dem Schritt des Verbindens von dem Bandmaterial auf Metallbasis, der Folienbahn auf Basis des Beschichtungsmaterials zur Verringerung des Reibwerts und der Folienbahn des Haftvermittlermaterials ein Anrauhen mindestens der oberen Fläche des Bandmaterials durchgeführt wird.

11. Verfahren nach einem der Ansprüche 1 bis 10, worin das Metallkunststoffhybridband durch Schneiden und Prägen in die Form eines Wälzlagerkäfigs bearbeitet wird.

12. Verfahren nach Anspruch 11, worin der Schritt des Prägens derart ausgeführt wird, daß die Beschichtung beim Prägen über die beim Schneiden erzeugte Schnittkante des Käfigs fließt.

13. Verfahren nach einem der Ansprüche 1 bis 12, worin vor dem Schritt des Verbindens die Folienbahn auf Basis des Beschichtungsmaterials zur Verringerung des Reibwerts und die Folienbahn des Haftvermittlermaterials zu einer Hybridfolie verarbeitet werden.

14. Verfahren nach einem der Ansprüche 1 bis 13, wobei das Haftvermittlermaterial 30-50% und das Beschichtungsmaterial zur Verringerung des Reibwerts 50-70% der Gesamtdicke ausmacht.

## Claims

1. Method for producing a rolling-bearing cage, comprising the steps:
- the provision of a strip material, based on metal, with a lower face and with an upper face,
- the provision of a film web, based on a coating material, for reducing the coefficient of friction and of a film web of an adhesion promoter material, in that the adhesion promoter material and the coating material are in each case sintered into a semi-finished product and are subsequently further processed in a lathe in each case in such a way that, while the semi-finished product is set in rotation, in each case a corresponding film web is generated by means of peeling knives in the plunge-cutting method,
- the connection of the strip material based on metal, of the film web based on the coating material for reducing the coefficient of friction and of the film web of the adhesion promoter material in a twin press at a temperature in the range of 300 to 330°C and under a pressure of 2 to 20 N/mm², so that an intermediate layer of the adhesion promoter material is arranged at least on the upper face of the strip material and the coating for reducing the coefficient of friction is arranged on the said intermediate layer, with the result that a corresponding metal/plastic hybrid strip is formed, the coating for reducing the coefficient of friction comprising at least one fluoropolymer, and the overall thickness of the intermediate layer of the adhesion promoter material and the coating for reducing the coefficient of friction lying in the range of 10 to 100 µm, and
- the processing of the metal/plastic hybrid strip into the form of a rolling-bearing cage, the at least one surface side of the rolling-bearing cage which has the coating being arranged in such a way that it faces the rolling bodies to be guided or to be mounted.

2. Method according to Claim 1, the strip material based on metal being a steel which conforms to DIN 10088-3 (195-8).

3. Method according to Claim 2, the steel being a steel having the material number 1.4301, 1.4310 or 1.4016 according to DIN 10088-3 (195-8).

4. Method according to one of Claims 1 to 3, the overall thickness of the intermediate layer of the adhesion promoter material and the coating for reducing the coefficient of friction lying in the range of between 40 and 60 µm.

5. Method according to one of Claims 1 to 4, the fluoropolymer being polytetrafluoroethylene.

6. Method according to one of Claims 1 to 5, the coating for reducing the coefficient of friction comprising, further, 1 to 20% by weight of a filler with respect to the overall weight of the coating.

7. Method according to Claim 6, the coating comprising 4 to 6% by weight of the filler with respect to the overall weight of the coating.

8. Method according to Claim 6 or 7, the filler being polyphenylenesulphone (PPSO₂).

9. Method according to one of Claims 1 to 8, the intermediate layer being a layer based on tetrafluoroethylene/perfluoroalkylvinylether copolymer (PFA).

10. Method according to one of Claims 1 to 9, in which, before the step of the connection of the strip material based on metal, of the film web based on the coating material for reducing the coefficient of friction and of the film web of the adhesion promoter material, a roughening of at least the upper face of the strip material is carried out.

11. Method according to one of Claims 1 to 10, in which the metal/plastic hybrid strip is machined by cutting and embossing into the form of a rolling-bearing cage.

12. Method according to Claim 11, in which the embossing step is carried out in such a way that, during embossing, the coating flows over the cage cut edge generated during cutting.

13. Method according to one of Claims 1 to 12, in which, before the connection step, the film web based on the coating material for reducing the coefficient of friction and the film web of the adhesion promoter material are processed into a hybrid film.

14. Method according to one of Claims 1 to 13, the adhesion promoter material amounting to 30-50% and the coating material for reducing the coefficient of friction to 50-70% of the overall thickness.

## Revendications

1. Procédé de fabrication d'une cage de roulement, comprenant les étapes suivantes :
- la préparation d'un matériau en bande à base de métal avec une surface inférieure et une surface supérieure,
- la préparation d'une bande de film à base de matériau de revêtement permettant de réduire la valeur de frottement et d'une bande de film d'un matériau promoteur d'adhérence du fait que le matériau promoteur d'adhérence et le matériau de revêtement ne sont respectivement frittés que pour obtenir un demi-produit et subissent ensuite un traitement ultérieur dans un tour respectivement de manière à ce que, pendant que le demi-produit est mis en rotation, respectivement une bande de film correspondante soit réalisée par un procédé de trépanage à l'aide d'une lame d'écroûtage,
- le rattachement de la bande de matériau à base de métal, de la bande de film à base de matériau de revêtement permettant de réduire la valeur de frottement et de la bande de film de matériau promoteur d'adhérence dans une presse à double bande à une température se situant dans la plage de 300 à 330° C et sous une pression de 2 à 20 N/mm², de manière à ce que soient disposés, au moins sur la surface supérieure de la bande de matériau, une couche intermédiaire de matériau promoteur d'adhérence et, par-dessus, le revêtement permettant de réduire la valeur de frottement, ce qui constitue une bande hybride de métal et matière plastique correspondante,
le revêtement permettant de réduire la valeur de frottement contenant au moins un polymère fluoré et l'épaisseur totale de la couche intermédiaire de matériau promoteur d'adhérence et du revêtement permettant de réduire la valeur de frottement se situant dans la plage de 10 à 100 µm, et
- la transformation de la bande hybride de métal et matière plastique pour obtenir la forme d'une cage de roulement, l'au moins une face surfacique de la cage de roulement pourvue du revêtement étant disposée de manière à être tournée vers les corps de rouleaux à guider ou à appuyer.

2. Procédé selon la revendication 1, le matériau en bande à base de métal étant un acier qui correspond à la DIN 10088-3 (195-8).

3. Procédé selon la revendication 2, l'acier étant un acier portant le numéro de matière première 1.4302, 1.4310 ou 1.4016 selon la DIN 10088-3 (195-8).

4. Procédé selon l'une quelconque des revendications 1 à 3, l'épaisseur totale de la couche intermédiaire de matériau promoteur d'adhérence et du revêtement permettant de réduire la valeur de frottement se situant dans la plage de 40 à 60 µm.

5. Procédé selon l'une quelconque des revendications 1 à 4, le polymère fluoré étant du polytétrafluoréthylène.

6. Procédé selon l'une quelconque des revendications 1 à 5, le revêtement permettant de réduire la valeur de frottement contenant en outre 1 à 20 % en poids de matière de charge par rapport au poids total du revêtement.

7. Procédé selon la revendication 6, le revêtement contenant 4 à 6 % en poids de matière de charge par rapport au poids total du revêtement.

8. Procédé selon la revendication 6 ou 7, la matière de charge étant du sulfone de polyphènylène (PPSO₂).

9. Procédé selon l'une quelconque des revendications 1 à 8, la couche intermédiaire étant une couche à base de copolymères de tétrafluoréthylène-perfluoralkylvinyléther (PFA).

10. Procédé selon l'une quelconque des revendications 1 à 9, dans lequel, avant l'étape de rattachement du matériau en bande à base de métal, de la bande de film à base de matériau de revêtement permettant de réduire la valeur de frottement et de la bande de film du matériau promoteur d'adhérence, on rugosifie au moins la surface supérieure de la bande de matériau.

11. Procédé selon l'une quelconque des revendications 1 à 10, dans lequel la bande hybride de métal et matière plastique est traitée par découpage et gaufrage pour obtenir la forme d'une cage de roulement.

12. Procédé selon la revendication 1, dans lequel l'étape de gaufrage est exécutée de manière à ce que, lors du gaufrage, le revêtement coule par dessus l'arête de coupe créée lors de la découpe de la cage.

13. Procédé selon l'une quelconque des revendications 1 à 12, dans lequel, avant l'étape de rattachement, la bande de film à base de matériau de revêtement permettant de réduire la valeur de frottement et la bande de film de matériau promoteur d'adhérence sont transformées pour obtenir un film hybride.

14. Procédé selon l'une quelconque des revendications 1 à 13, le matériau promoteur d'adhérence représentant 30 à 50 % et le matériau de revêtement permettant de réduire la valeur de frottement 50 à 70 % de l'épaisseur totale.
